# EUROPÄISCHE PATENTSCHRIFT

(11) **EP 3 988 858 B1**
(45) Veröffentlichungstag und Bekanntmachung des Hinweises auf die Patenterteilung: **23.08.2023**
(21) Anmeldenummer: 21202889.8
(22) Anmeldetag: 15.10.2021
(51) Int. Cl.: F24H 8/00, F24H 9/00

(54) **VERFAHREN UND VORRICHTUNG ZUM ABDICHTEN EINES ABGASRAUMES EINES HEIZGERÄTES, INSBESONDERE EINES BRENNWERT-HEIZGERÄTES, GEGENÜBER EINEM AUFSTELLRAUM**
METHOD AND DEVICE FOR SEALING AN EXHAUST GAS AREA OF A HEATING DEVICE, IN PARTICULAR A CONDENSING BOILER, RELATIVE TO AN INSTALLATION SPACE
PROCÉDÉ ET DISPOSITIF D'ÉTANCHÉIFICATION D'UNE CHAMBRE DE GAZ D'ÉCHAPPEMENT D'UN APPAREIL DE CHAUFFAGE, EN PARTICULIER D'UN APPAREIL DE CHAUFFAGE À POUVOIR CALORIFIQUE, PAR RAPPORT À UNE CHAMBRE D'INSTALLATION

(30) Priorität: 23.10.2020 DE 102020127929
(43) Veröffentlichungstag der Anmeldung: 27.04.2022
(73) Patentinhaber: Vaillant GmbH, 42859 Remscheid (DE)
(72) Erfinder: Gaisbauer, Norbert, 42799 Leichlingen (DE); Gerhards, Andreas, 42897 Remscheid (DE); Gontov, Sergey, 51381 Leverkusen (DE)
(74) Vertreter: Popp, Carsten

(56) Entgegenhaltungen:
- EP-A1- 3 614 068
- DE-A1- 10 025 729
- DE-A1-102007 050 020
- DE-A1-102015 216 688
- DE-U1-202009 002 760

## Beschreibung

Die Erfindung betrifft ein Verfahren und eine Vorrichtung zum Abdichten eines Abgasraumes eines Heizgerätes, insbesondere eines sogenannten Brennwert-Heizgerätes, gegenüber einem Aufstellraum. Heizgeräte zum Heizen von Gebäuden und/oder von Brauchwasser werden typischerweise in einem begehbaren Raum, insbesondere einem Kellerraum, eines Gebäudes aufgestellt. Dabei ist es besonders wichtig, dass keine Abgase in den Aufstellraum geraten können, da dies für Personen, die den Aufstellraum betreten oder sich woanders im Gebäude aufhalten, negative gesundheitliche Folgen haben könnte. Es wird daher eine weitgehende Dichtheit für solche Heizgeräte gefordert. Andererseits entsteht an Wärmetauschern von solchen Heizgeräten unter bestimmten Betriebsbedingungen Kondenswasser, welches abgeführt werden muss, was typischerweise zu einem Ablauf im Aufstellraum erfolgt. Dessen Dichtheit wird nach dem Stand der Technik meist durch einen Siphon mit Sperrflüssigkeit oder mittels eines Schwimmers mit Schließfunktion erreicht, was für normale Betriebssituationen auch ausreicht.

Die Schriften DE102015216688 A1 und DE10025729 A1 beschreiben Vorrichtungen zum Abdichten eines Abgasraumes eines Heizgerätes gegenüber einem umgebenden Aufstellraum, wobei zur Ableitung von Kondensat aus dem Abgasraum zu einem Auslass im Aufstellraum ein Siphon mit Schwimmer und Schließfunktion vorhanden ist und wobei ein brennerseitiger Abgasraum von einem siphonseitigen Abgasraum durch eine Zwischenwand getrennt ist, die mit einer Unterkante in ein mit einer Flüssigkeitsvorlage füllbares Druckdämpfungsbecken soweit eintaucht, dass bei gefülltem Druckdämpfungsbecken kein Gas oberhalb einer Oberfläche der Flüssigkeitsvorlage zwischen brennerseitigem Abgasraum und siphonseitigem Abgasraum ausgetauscht werden kann.

Es gibt Situationen, bei denen Druckstöße im Abgasraum auftreten, die einen solchen Siphon belasten können. So kann es beim Zünden eines Brenners beispielsweise zu sogenannten harten Zündungen kommen, bei denen eine Zündung so spät nach dem Öffnen der Brennstoffzufuhr erfolgt, dass sich schon eine gewisse Menge zündfähiges Gemisch im Verbrennungsraum angesammelt hat. Dies führt dann beim Zünden zu einer kleinen Art von Verpuffung und verursacht Druckspitzen im Abgasraum und allen damit verbundenen Systemen. Das Prinzip des Siphons mit Schwimmer beruht auf der Schwerkraftwirkung einer Wassersäule in kommunizierenden Gefäßen. Die Wassersäule bewirkt eine bewegliche nachgebende Trennung zwischen dem Abgasraum und dem Aufstellraum, so dass nur geringe Druckkräfte übertragen werden. Dies setzt allerdings voraus, dass die Flüssigkeitssäule eine genügende Höhe hat, wenn auch Druckspitzen ohne Beschädigung des Siphos mit Schwimmer kompensiert werden sollen. Dies wiederum verlangt unter dem Abgassystem genügend Bauraum, der nicht immer vorhanden ist. Das Problem kann sich noch verschärfen, wenn die Wege zur Zuführung von Frischluft zum Brenner und Abführung von Abgas lang, kompliziert und/oder mit zusätzlichen Einbauten ausgestaltet sind, z. B. bei größer Länge einer exzentrischen Rohrführung. Auch dies kann zu Überdruckspitzen beim Zünden oder Betrieb und einer Beschädigung des Siphons führen.

Aufgabe der vorliegenden Erfindung ist es, die mit Bezug auf den Stand der Technik geschilderten Probleme wenigstens teilweise zu lösen und insbesondere die Dichtheit (entsprechend gesetzlichen Vorgaben oder vorgebbaren technischen Anforderungen) zwischen einem Abgasraum oder Abgasweg und einem umgebenden Aufstellraum unabhängig von der Bauart, Größe und Wassersäulenhöhe eines Siphons zur Ableitung von Kondensat auch bei auftretenden Druckstößen oder Druckspitzen zu gewährleisten.

Zur Lösung dieser Aufgabe dienen ein Verfahren und eine Vorrichtung gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt weitere Ausführungsbeispiele an.

Hierzu trägt ein Verfahren zum Abdichten eines Abgasraumes eines Heizgerätes gegenüber einem umgebenden Aufstellraum bei, wobei im Abgasraum ein Kondensat von einem Wärmetauscher zu einem Ablauf mit einem Siphon mit Schwimmer und Schließfunktion geführt wird. Das Kondensat wird auf seinem Weg zum Siphon zunächst in einer Flüssigkeitsvorlage in einem Druckdämpfungsbecken gesammelt. Weiter wird eine Zwischenwand in die Flüssigkeitsvorlage eintaucht, so dass Kondensat nur unter einer Unterkante der Zwischenwand hindurch zum Siphon fließen kann. Zusätzlich ist eine Öffnung, die eine kleinere Öffnungsquerschnittsfläche hat als eine freie Querschnittsfläche in der Flüssigkeitsvorlage im Druckdämpfungsbecken unter der Zwischenwand, in der Zwischenwand oberhalb einer Oberfläche der Flüssigkeitsvorlage eingebracht als einzige Verbindung oberhalb der Oberfläche der Flüssigkeitsvorlage im Druckdämpfungsbecken zwischen einem brennerseitigen Abgasbereich und einem siphonseitigen Abgasbereich.

Die Zwischenwand trennt einen brennerseitigen Abgasraum von einem siphonseitigen Abgasraum. Bei einem normalen Betriebszustand gleicht sich der Druck zwischen beiden durch die Öffnung aus, so dass die Oberflächen der Flüssigkeitsvorlage im brennerseitigen Abgasraum und im siphonseitigen Abgasraum gleich hoch sind und die Zwischenwand in die Flüssigkeitsvorlage eintaucht. Das Druckdämpfungsbecken mit der Zwischenwand bildet eine Art Druckdämpfungssiphon, wobei die Öffnung eine Verbindung zwischen den beiden Schenkeln dieses Siphons schafft. Dabei ist die Öffnung relativ klein im Vergleich zu der freien Querschnittsfläche unter der Zwischenwand. Dies hat bei einem Druckstoß (einem kurzzeitigen dynamischen Überdruck) im brennerseitigen Abgasraum den Vorteil, dass Gas unter der Zwischenwand durch die Flüssigkeitsvorlage im Druckdämpfungsbecken gedrückt wird, wobei ein großer Teil des dynamischen Druckes abgebaut wird und nicht mehr auf den (Schwimmer im) Siphon wirken kann. Die Öffnung bewirkt dagegen nur eine vernachlässigbare Weiterleitung dynamischer Druckstöße.

Bevorzugt werden Flüssigkeitsverluste der Flüssigkeitsvorlage durch Kondensat vom Wärmetauscher nachgefüllt bis überschüssiges Kondensat über eine siphonseitige Oberkante des Druckdämpfungsbeckens zum Siphon abläuft. Im Allgemeinen wird die Menge an anfallendem Kondensat ausreichen, den Druckdämpfungsbehälter gefüllt zu halten, ansonsten kann eine andere Art der Nachfüllung oder eine Füllstandskontrolle vorgesehen werden.

Wie oben beschrieben strömt bei einem Druckstoß im brennerseitigen Abgasraum Gas durch die Flüssigkeitsvorlage im Druckdämpfungsbecken unter der Zwischenwand hindurch in den siphonseitigen Abgasraum, wobei der Druckstoß gedämpft wird und wobei anschließend wieder ein Druckausgleich durch die Öffnung in der Zwischenwand stattfindet, also ein eventuell entstandener Überdruck im siphonseitigen Abgasbereich wieder abgebaut wird. Die Größe der Querschnittsfläche der Öffnung bzw. die Querschnittsfläche und die Länge und Form des Gasweges durch die Öffnung bestimmen die Zeit, die ein Druckausgleich braucht. Hier werden Zeiten von 1 bis 10 s [Sekunden], vorzugsweise 2 bis 5 s eingestellt.

Ein weiterer Aspekt betrifft eine Vorrichtung zum Abdichten eines Abgasraumes eines Heizgerätes gegenüber einem umgebenden Aufstellraum, wobei zur Ableitung von Kondensat aus dem Abgasraum zu einem Auslass im Aufstellraum ein Siphon mit Schwimmer und Schließfunktion vorhanden ist und wobei ein brennerseitiger Abgasraum von einem siphonseitigen Abgasraum durch eine Zwischenwand getrennt ist, die mit einer Unterkante in ein mit einer Flüssigkeitsvorlage füllbares Druckdämpfungsbecken soweit eintaucht, dass bei gefülltem Druckdämpfungsbecken kein Gas oberhalb einer Oberfläche der Flüssigkeitsvorlage zwischen brennerseitigem Abgasraum und siphonseitigem Abgasraum ausgetauscht werden kann außer durch eine Öffnung in der Zwischenwand oberhalb der Oberfläche der Flüssigkeitsvorlage, die in ihrer Querschnittsfläche kleiner ist als eine freie Querschnittsfläche unterhalb einer Unterkante der Zwischenwand in der Flüssigkeitsvorlage in dem Druckdämpfungsbecken.

Bevorzugt besteht die Flüssigkeitsvorlage ganz oder teilweise aus Kondensat (aus der Verbrennungsluft kondensiertes Wasser). Dieses entsteht bei der Verbrennung und tropft von einem Wärmetauscher bei bestimmten Betriebsbedingungen ab (weshalb überhaupt der Siphon vorhanden ist), so dass genügend Kondensat für die Flüssigkeitsvorlage zur Verfügung steht.

In einer bevorzugten Ausführungsform beträgt die Querschnittsfläche der Öffnung 0,1 bis 10 %, vorzugsweise 0,5 bis 5 %, insbesondere 1 bis 3 % der freien Querschnittsfläche unterhalb der Unterkante der Zwischenwand.

Es kann eine Querschnittsfläche der Öffnung von 2 bis 15 mm² [Quadratmillimeter], vorzugsweise 3 bis 10, insbesondere 4 bis 6 vorgesehen sein. Diese Werte beziehen sich auf eine kreisrunde Öffnung (Bohrung) und eine 0,1 bis 2 mm [Millimeter] dicke Zwischenwand. Bei einer dickeren Zwischenwand oder anderen Form der Öffnung muss deren Querschnittsfläche entsprechend größer sein.

Wenn die Zwischenwand, wie bevorzugt, etwa senkrecht (zur Oberfläche der Flüssigkeitsvorlage) verläuft, gehen vertikal verlaufende dynamische Druckstöße praktisch an der Öffnung vorbei, so dass die Öffnung bei Druckstößen nur eine vernachlässigbare Wirkung hat.

Obwohl die Öffnung aus herstellungstechnischen Gründen bevorzugt durch eine Bohrung gebildet wird, kann sie auch durch eine in die Zwischenwand eingesetzte offene Röhre ausgebildet sein. Dann entscheiden offene Querschnittsfläche und Länge der Röhre über die Wirkung auf Druckverläufe bei Druckstößen und einen späteren Druckausgleich.

Die Erläuterungen zum Verfahren können zur näheren Charakterisierung der Vorrichtung herangezogen werden, und umgekehrt.

Ein schematisches Ausführungsbeispiel der Erfindung, auf das diese jedoch nicht beschränkt ist, und die Funktionsweise des Verfahrens werden nun anhand der Zeichnung näher erläutert. Es stellen dar:
- Fig. 1:: eine erfindungsgemäße Vorrichtung zum Abdichten eines Abgasraumes eines Heizgerätes und
- Fig. 2:: eine Ausführungsform der Erfindung mit einer integrierten Bauweise von Siphon und Druckdämpfungsbecken.

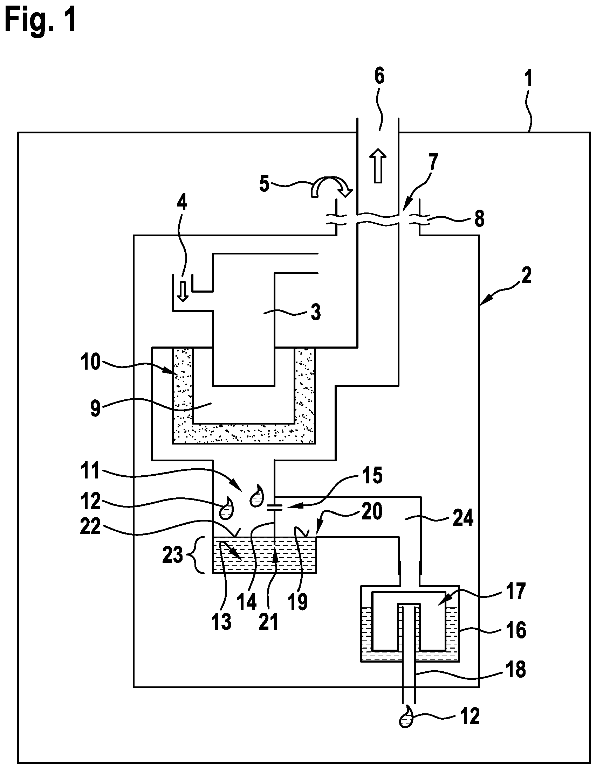

Fig. 1 zeigt schematisch eine Vorrichtung zum Abdichten eines Abgasraumes 11, 24 eines Heizgerätes 2 gegenüber einem Aufstellraum 1. Das Heizgerät 2 weist einen Brenner 3 auf, der von einem Brenngaseinlass 4 mit Brenngas und von einem Verbrennungslufteinlass 5 mit Luft (Frischluft) versorgt wird. Das Brenngas-Luft-Gemisch wird in einem Verbrennungsraum 9 verbrannt und gelangt über einen Wärmetauscher 10 durch einen brennerseitigen Abgasraum 11 zu einem Abgasauslass 6. Der Verbrennungslufteinlass 5 und/oder der Abgasauslass 6 können mit Abgaseinbauten 7 bzw. Frischlufteinbauten 8, insbesondere Zubehörteilen, Verlängerungen und dergleichen, ausgestattet sein, die die Druckverhältnisse im gesamten System beeinflussen.

Vom Wärmetauscher 10 wird zumindest zeitweise Kondensat 12 gebildet, welches zu einem Ablauf 18 im Aufstellraum 1 geführt wird. Ein Siphon 16 mit Schwimmer 17 und Schließfunktion dichtet den Abgasraum 11, 24 gegenüber dem Aufstellraum 1 ab. Ein solcher Siphon 16 ist empfindlich gegenüber dynamischen Druckstößen und kann durch diese beschädigt werden, z. B. wenn er aus Platzgründen nicht genügend groß dimensioniert sein kann.

Weiter ist eine Zwischenwand 14 vorgesehen, die den Abgasraum 11, 24 unterteilt in einen brennerseitigen Abgasraum 11 und einen siphonseitigen Abgasraum 24. Die Zwischenwand 14 taucht mit einer Unterkante in eine Flüssigkeitsvorlage 13, die sich in einem Druckdämpfungsbecken 23 befindet. Die Flüssigkeitsvorlage 13 hat eine brennerseitige Oberfläche 22 und eine siphonseitige Oberfläche 19, wobei beide auf gleicher Höhe liegen, wenn der Druck in beiden Abgasräumen 11, 24 gleich ist. Damit sich dieses Gleichgewicht im statischen Betrieb einstellt, ist in der Zwischenwand 14 eine Öffnung 15 vorgesehen, insbesondere eine Bohrung mit einem Durchmesser von 1 bis 5 mm. Es kann jedoch auch eine Röhre in die Zwischenwand 14 eingesetzt sein, oder die Öffnung kann eine nicht runde Form aufweisen.

Insbesondere ist das System so eingerichtet, dass die Öffnung in einer Zeit von 1 bis 10 s in einem statischen Betrieb im Wesentlichen für einen Druckausgleich sorgen kann. Je größer die Öffnung 15 ist, desto schneller erfolgt der Druckausgleich, jedoch soll die Öffnung 15 andererseits eine vernachlässigbare Wirkung bei dynamischen Druckänderungen haben, weshalb die Dimensionierung ein Kompromiss zwischen beiden Anforderungen ist. Da die Zwischenwand 14 bevorzugt senkrecht zur Oberfläche 19, 22 der Flüssigkeitsvorlage 13 verläuft (also vertikal angeordnet ist) und entsprechend die Öffnung 15 etwa senkrecht zu eventuellen dynamischen Druckströmungen liegt (bevorzugt etwa horizontal verläuft, aber auch gegen die Horizontale geneigt angeordnet sein kann), ist ein Kompromiss leicht zu finden. Bei einem dynamischen Druckverlauf, Druckstoß oder einer Druckspitze wird daher Gas unter der Unterkante 21 der Zwischenwand 14 hindurchgedrückt, wobei sich der dynamische Druck weitgehend abbaut. Nach einem Druckstoß ist der Druck in dem siphonseitigen Abgasraum 24 möglicherweise etwas höher als in dem brennerseitigen Abgasraum 11, was sich durch die Öffnung 14 in wenigen Sekunden wieder ausgleicht. Der Siphon 16 wird dabei kaum dynamisch belastet. Die Flüssigkeitsvorlage 13 wird durch Kondensat 12 immer wieder aufgefüllt bis zur Höhe einer siphonseitigen Oberkante 20 des Druckdämpfungsbeckens 23. Überschüssiges Kondensat 12 läuft dann ab zum Siphon 16 und Ablauf 18.

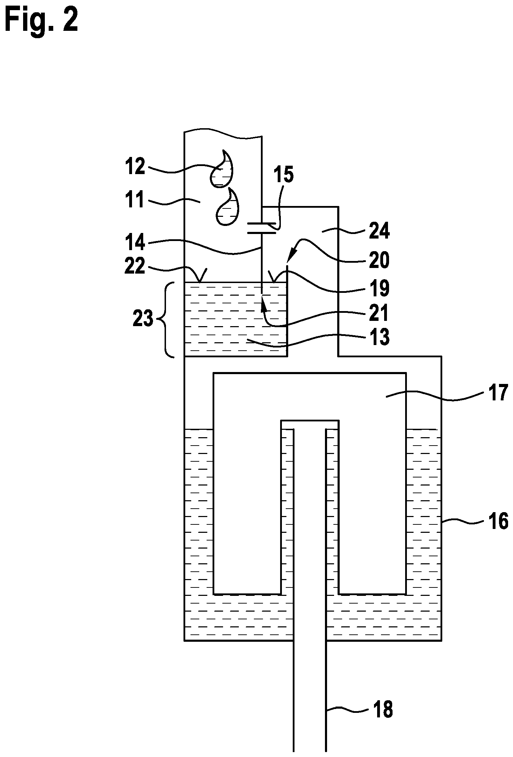

Fig. 2 zeigt eine andere Ausführungsform der Erfindung, bei der das Druckdämpfungsbecken 23 mit dem Siphon 16 stärker integriert ist. Alle Bauteile sind mit den gleichen Bezugszeichen wie in Fig. 1 versehen, und es ist nur der untere Teil der Fig. 1 in vergrößerter Darstellung gezeigt. Bei dieser Ausführungsform liegt der siphonseitige Abgasraum 24 vollständig über dem Siphon 16, so dass aus der Flüssigkeitsvorlage 13 über die siphonseitige Oberkante 20 des Dämpfungsbeckens 23 überlaufende Flüssigkeit direkt (ohne weitere Leitungen) in den Siphon 16 fließt. Dies erlaubt eine platzsparende Bauweise mit einer geringen Zahl an Einzelteilen.

Die vorliegende Erfindung erlaubt es, bei einem Heizgerät, insbesondere bei einem Brennwert-Heizgerät, dynamische Druckschwankungen, beispielsweise durch verzögerte Zündungen, von einem Siphon mit Schwimmer und Schließfunktion weitestgehend fernzuhalten, so dass dieser unabhängig von seiner Bauweise und Dimensionierung für Dichtheit zwischen Abgasraum und Aufstellraum sorgen kann.

### Bezugszeichenliste

- 1: Aufstellraum
- 2: (Brennwert)-Heizgerät
- 3: Brenner
- 4: Brenngaseinlass
- 5: Verbrennungslufteinlass (Frischluft)
- 6: Abgasauslass
- 7: Abgaseinbauten
- 8: Frischlufteinbauten
- 9: Verbrennungsraum
- 10: Wärmetauscher
- 11: Abgasraum (brennerseitig)
- 12: Kondensat
- 13: Flüssigkeitsvorlage
- 14: Zwischenwand
- 15: Öffnung
- 16: Siphon
- 17: Schwimmer mit Schließfunktion
- 18: Ablauf
- 19: Siphonseitige Oberfläche der Flüssigkeitsvorlage
- 20: Siphonseitige Oberkante des Dämpfungsbeckens
- 21: Unterkante der Zwischenwand
- 22: Brennerseitige Oberfläche der Flüssigkeitsvorlage
- 23: Druckdämpfungsbecken
- 24: Siphonseitiger Abgasraum

## Patentansprüche

1. Verfahren zum Abdichten eines Abgasraumes (11, 24) eines Heizgerätes (2) gegenüber einem umgebenden Aufstellraum (1), wobei im Abgasraum (11, 24) ein Kondensat (12) von einem Wärmetauscher (10) zu einem Ablauf (18) mit einem Siphon (16) mit Schwimmer (17) und Schließfunktion geführt wird, wobei das Kondensat (12) auf seinem Weg zum Siphon (16) zunächst in einer Flüssigkeitsvorlage (13) in einem Druckdämpfungsbecken (23) gesammelt wird, wobei weiter eine Zwischenwand (14) in die Flüssigkeitsvorlage (13) eintaucht, so dass Kondensat (12) nur unter einer Unterkante (21) der Zwischenwand (14) hindurch zum Siphon (16) fließen kann und wobei weiter eine Öffnung (15), die einen kleineren Öffnungsquerschnitt hat als ein freier Querschnitt in der Flüssigkeitsvorlage (13) im Druckdämpfungsbecken (23) unter der Zwischenwand (14), in der Zwischenwand (14) oberhalb einer Oberfläche (19, 22) der Flüssigkeitsvorlage (13) eingebracht wird als einzige Verbindung oberhalb der Oberfläche (19, 22) der Flüssigkeitsvorlage (13) im Druckdämpfungsbecken (23) zwischen einem brennerseitigen Abgasbereich (11) und einem siphonseitigen Abgasbereich (24).

2. Verfahren nach Anspruch 1, wobei Flüssigkeitsverluste der Flüssigkeitsvorlage (13) durch Kondensat (12) vom Wärmetauscher (10) nachgefüllt wird bis überschüssiges Kondensat (12) über eine siphonseitige Oberkante (20) des Druckdämpfungsbeckens (23) zum Siphon (16) abläuft.

3. Verfahren nach Anspruch 1 oder 2, wobei bei einem Druckstoß in einem brennerseitigen Abgasraum (11) Gas durch die Flüssigkeitsvorlage (13) im Druckdämpfungsbecken (23) unter der Zwischenwand (14) hindurch in den siphonseitigen Abgasraum (24) strömt und dabei den Druckstoß dämpft, wobei anschließend wieder ein Druckausgleich durch die Öffnung (15) in der Zwischenwand (14) stattfindet.

4. Vorrichtung zum Abdichten eines Abgasraumes (11, 24) eines Heizgerätes (2) gegenüber einem umgebenden Aufstellraum (1), wobei zur Ableitung von Kondensat (12) aus dem Abgasraum (11, 24) zu einem Ablauf (18) im Aufstellraum (1) ein Siphon (16) mit Schwimmer (17) und Schließfunktion vorhanden ist und wobei ein brennerseitiger Abgasraum (11) von einem siphonseitigen Abgasraum (24) durch eine Zwischenwand (14) getrennt ist, die mit einer Unterkante (21) in ein mit einer Flüssigkeitsvorlage (13) füllbares Druckdämpfungsbecken (23) soweit eintaucht, dass bei gefülltem Druckdämpfungsbecken (23) kein Gas oberhalb einer Oberfläche (19, 22) der Flüssigkeitsvorlage (13) zwischen brennerseitigem Abgasraum (11) und siphonseitigem Abgasraum (24) ausgetauscht werden kann außer durch eine Öffnung (15) in der Zwischenwand (14) oberhalb der Oberfläche (19, 22) der Flüssigkeitsvorlage (13), die in ihrer Querschnittsfläche kleiner ist als eine freie Querschnittsfläche unterhalb einer Unterkante (21) der Zwischenwand (14) in der Flüssigkeitsvorlage (13) in dem Druckdämpfungsbecken (23).

5. Vorrichtung nach Anspruch 4, wobei die Flüssigkeitsvorlage (13) ganz oder teilweise aus Kondensat (12) besteht.

6. Vorrichtung nach Anspruch 4 oder 5, wobei die Querschnittsfläche der Öffnung (15) 0,1 bis 10 % der freien Querschnittsfläche unterhalb der Unterkante (21) der Zwischenwand (14) beträgt.

7. Vorrichtung nach Anspruch 6, wobei die Querschnittsfläche der Öffnung (15) 2 bis 15 Quadratmillimeter beträgt.

8. Vorrichtung nach einem der Ansprüche 4 bis 7, wobei die Zwischenwand (14) etwa senkrecht zur Oberfläche (19, 22) der Flüssigkeitsvorlage (13) verläuft.

9. Vorrichtung nach einem der Ansprüche 4 bis 8, wobei die Öffnung (15) durch eine Bohrung oder durch eine in die Zwischenwand (14) eingesetzte Röhre gebildet wird.

## Claims

1. Method for sealing an exhaust gas space (11, 24) of a heater (2) relative to a surrounding installation space (1), wherein in the exhaust gas space (11, 24) a condensate (12) is guided from a heat exchanger (10) to a drain (18) with a siphon (16) having a float (17) and a closing function, wherein the condensate (12), on its way to the siphon (16), is first collected in a liquid reservoir (13) in a pressure damping basin (23), wherein furthermore a partition (14) is immersed in the liquid reservoir (13), such that condensate (12) can flow only under a lower edge (21) of the partition (14) through to the siphon (16), and wherein furthermore an opening (15) which has a smaller opening cross-section than a free cross-section in the liquid reservoir (13) in the pressure damping basin (23) below the partition (14) is made in the partition wall (14) above a surface (19, 22) of the liquid reservoir (13) as the only connection above the surface (19, 22) of the liquid reservoir (13) in the pressure damping basin (23) between a burner-side exhaust gas region (11) and a siphon-side exhaust gas region (24).

2. Method according to claim 1, wherein fluid losses of the fluid reservoir (13) are replenished by condensate (12) from the heat exchanger (10) until excess condensate (12) drains to the siphon (16) via a siphon-side upper edge (20) of the pressure damping basin (23).

3. Method according to claim 1 or 2, wherein, in the event of a pressure surge in a burner-side exhaust gas space (11), gas flows through the liquid reservoir (13) in the pressure damping basin (23) under the partition (14) into the siphon-side exhaust gas space (24), thereby damping the pressure surge, wherein pressure equalisation subsequently takes place again by way of the opening (15) in the partition (14).

4. Device for sealing an exhaust gas space (11, 24) of a heater (2) relative to a surrounding installation space (1), wherein a siphon (16) having a float (17) and a closing function is provided for discharging condensate (12) from the exhaust gas chamber (11, 24) to a drain (18) in the installation space (1), and wherein a burner-side exhaust gas space (11) is separated from a siphon-side exhaust gas space (24) by a partition (14) whose lower edge (21) is immersed in a pressure damping basin (23) which can be filled with a liquid reservoir (13) to such an extent that, when the pressure damping basin (23) is filled, no gas can be exchanged above a surface (19, 22) of the liquid reservoir (13) between the burner-side exhaust gas space (11) and the siphon-side exhaust gas space (24) except through an opening (15) in the partition (14) above the surface (19, 22) of the liquid reservoir (13), which opening is smaller in cross-sectional area than a free cross-sectional area below a lower edge (21) of the partition (14) in the liquid reservoir (13) in the pressure damping basin (23).

5. Device according to claim 4, wherein the liquid reservoir (13) consists entirely or partly of condensate (12).

6. Device according to claim 4 or 5, wherein the cross-sectional area of the opening (15) is 0.1 to 10% of the free cross-sectional area below the lower edge (21) of the partition (14).

7. Device according to claim 6, wherein the cross-sectional area of the opening (15) is 2 to 15 square millimetres.

8. Device according to any one of claims 4 to 7, wherein the partition (14) extends approximately perpendicular to the surface (19, 22) of the liquid reservoir (13).

9. Device according to any one of claims 4 to 8, wherein the opening (15) is formed by a bore or by a tube inserted into the partition (14).

## Revendications

1. Procédé d'étanchéification d'une chambre de gaz d'échappement (11, 24) d'un appareil de chauffage (2) par rapport à un local d'installation (1) environnant, dans lequel un condensat (12) est conduit dans la chambre de gaz d'échappement (11, 24) depuis un échangeur de chaleur (10) jusqu'à une évacuation (18) avec un siphon (16) avec flotteur (17) et fonction de fermeture, dans lequel le condensat (12) est d'abord recueilli sur son trajet vers le siphon (16) dans un réservoir de liquide (13) dans un bassin d'amortissement de pression (23), dans lequel en outre une paroi intermédiaire (14) est immergée dans le réservoir de liquide (13), de sorte que le condensat (12) ne peut s'écouler vers le siphon (16) qu'en passant sous un bord inférieur (21) de la paroi intermédiaire (14), et dans lequel en outre une ouverture (15), qui présente une section transversale d'ouverture plus petite qu'une section transversale libre dans le réservoir de liquide (13) dans le bassin d'amortissement de pression (23), se trouve sous la paroi intermédiaire (14), dans la paroi intermédiaire (14) au-dessus d'une surface (19, 22) du réservoir de liquide (13) comme seule liaison au-dessus de la surface (19, 22) du réservoir de liquide (13) dans le bassin d'amortissement de pression (23) entre une zone de gaz d'échappement (11) du côté brûleur et une zone de gaz d'échappement (24) du côté siphon.

2. Procédé selon la revendication 1, dans lequel des pertes de liquide du réservoir de liquide (13) sont complétées par du condensat (12) provenant de l'échangeur de chaleur (10) jusqu'à ce que le condensat en excès (12) s'écoule vers le siphon (16) par un bord supérieur (20) côté siphon du bassin d'amortissement de pression (23).

3. Procédé selon la revendication 1 ou 2, dans lequel, lors d'un coup de bélier dans une chambre de gaz d'échappement (11) côté brûleur, du gaz s'écoule à travers le réservoir de liquide (13) dans le bassin d'amortissement de pression (23) en passant sous la paroi intermédiaire (14) dans la chambre de gaz d'échappement (24) côté siphon et amortit ainsi le coup de bélier, dans lequel ensuite une compensation de pression a de nouveau lieu à travers l'ouverture (15) dans la paroi intermédiaire (14).

4. Dispositif d'étanchéification d'une chambre de gaz d'échappement (11, 24) d'un appareil de chauffage (2) par rapport à un local d'installation (1) environnant, dans lequel, pour évacuer le condensat (12) de la chambre de gaz d'échappement (11, 24) vers une évacuation (18) dans le local d'installation (1), un siphon (16) avec flotteur (17) et fonction de fermeture est présent et dans lequel une chambre de gaz d'échappement (11) côté brûleur est séparée d'une chambre de gaz d'échappement (24) côté siphon par une paroi intermédiaire (14) qui plonge avec un bord inférieur (21) dans un bassin d'amortissement de pression (23) pouvant être rempli d'un réservoir de liquide (13), à tel point que lorsque le bassin d'amortissement de pression (23) est rempli, aucun gaz ne peut être échangé au-dessus d'une surface (19, 22) du réservoir de liquide (13) entre la chambre de gaz d'échappement (11) côté brûleur et la chambre de gaz d'échappement (24) côté siphon, sauf par une ouverture (15) dans la paroi intermédiaire (14) au-dessus de la surface (19, 22) du réservoir de liquide (13), ouverture est inférieure sur sa surface de section transversale à une surface de section transversale libre en dessous d'un bord inférieur (21) de la paroi intermédiaire (14) dans le réservoir de liquide (13) dans le bassin d'amortissement de pression (23).

5. Dispositif selon la revendication 4, dans lequel le réservoir de liquide (13) consiste en tout ou partie en du condensat (12).

6. Dispositif selon la revendication 4 ou 5, dans lequel la surface de section transversale de l'ouverture (15) est comprise entre 0,1 et 10 % de la surface de section transversale libre en dessous du bord inférieur (21) de la paroi intermédiaire (14).

7. Dispositif selon la revendication 6, dans lequel la surface de section transversale de l'ouverture (15) est comprise entre 2 et 15 millimètres carrés.

8. Dispositif selon l'une quelconque des revendications 4 à 7, dans lequel la paroi intermédiaire (14) s'étend sensiblement perpendiculairement à la surface (19, 22) du réservoir de liquide (13).

9. Dispositif selon l'une quelconque des revendications 4 à 8, dans lequel l'ouverture (15) est formée par un alésage ou par un tube inséré dans la paroi intermédiaire (14).
